# EUROPÄISCHE PATENTANMELDUNG

(11) **EP 0 887 984 A2**
(43) Veröffentlichungstag der Anmeldung: **30.12.1998**
(21) Anmeldenummer: 98111409.3
(22) Anmeldetag: 22.06.1998
(51) Int. Cl.: H04M 1/02, H04B 1/38

(54) **Zweiteiliger Funktelefonapparat**

(30) Priorität: 23.06.1997 DE 19726545
(71) Anmelder: Saraceni, Rodolfo, 66292 Riegelsberg (DE)
(72) Erfinder: Saraceni, Rodolfo, 66292 Riegelsberg (DE)

(57) **Zusammenfassung**

Beim derzeitigen Stand der Technik gibt es eine Reihe von Funktelefonmodellen. Alle zum Telefonieren benötigten Teile befinden sich in einem Gehäuse und werden bei Benutzung in einer Einheit in unmittelbare Nähe, meist in direkten Kontakt mit dem menschlichen Kopf gebracht mit der Folge, dass sich einerseits die nach derzeit sich durchsetzender Erkenntnis für das menschliche Gehirn schädlichen Funkstrahlungen nachteilig auswirken können, andererseits ist das Bedienen des Gerätes während eines Telefonates nicht möglich.
Der Wert der Erfindung liegt darin, dass die Mobilität des Funktelefones voll erhalten bleibt, die gesundheitsschädlichen Strahlungen jedoch durch die Trennbarkeit der beiden Teile (wie aus der Zeichnung ersichtlich) fern vom menschlichen Kopf gehalten werden können.
Zusätzlich wird das Bedienen des Gerätes zeitgleich mit einem Gespräch ermöglicht, sodass nahezu alle Operationen am Bedienerfeld während eines Telefonates ermöglicht werden, ohne das Gespräch auch nur kurzfristig unterbrechen zu müssen.

## Beschreibung

Die Erfindung betrifft einen Funktelefonapparat und besteht darin, dass die in einem Funktelefonapparat nach heutigen Erkenntnissen für die Gesundheit bedenklichen Teile (Dipolantenne und Transponder) abgetrennt und bei der Telekommunikation vom menschlichen Kopf ferngehalten werden können. Die Erfindung besteht im Weiteren darin, dass Bedienerfeld und Display ebenfalls ―zusammen mit der Dipolantenne und dem Transponder - abgetrennt werden können, sodass es zeitlich parallel und während eines Telefongespräches möglich ist, Daten abzulesen und den Funktelefonapparat zu bedienen; so kann z.B. eine Mitteilung des Gesprächspartners am Gerät notiert oder Anweisungen befolgt werden, ohne eine auch noch so kurze Unterbrechung in Kauf nehmen zu müssen. Das Sende-/Empfangsignal wird dann in der Weise übertragen, wie in Anspruch 2 oder 6 genannt, und in Zeichnung II und IV dargestellt.

Beim derzeitigen Stand der Technik gibt es eine Reihe von Funktelefonmodellen, die über immer bessere und umfangreichere Technik verfügen, und dabei trotzdem immer kleiner und leichter dimensioniert sind.
Alle zum Telefonieren benötigten Teile befinden sich in einem Gehäuse und werden bei Benutzung in einer Einheit in unmittelbare Nähe, meist in direkten Kontakt des menschlichen Kopfes gebracht mit der Folge, dass sich einerseits die nach derzeit sich durchsetzender Erkenntnis für das menschliche Gehirn schädlichen Funkstrahlungen nachteilig auswirken können, andererseits ist das Bedienen des Gerätes während eines Telefonates nicht möglich, z.B. muss zum Abfragen einer gespeicherten Nummer oder Befolgen einer Anweisung der Mailbox-Dienste (Drücken bestimmter Tasten) das Gerät aus der beim Telefonieren gewohnten Zwangsstellung gebracht werden: Das Gerät muss vom Ohr-/Mundbereich entfernt und in Sichtweite gebracht werden; folglich ist das Gespräch zumindest kurzzeitig unterbrochen.

Der Wert der Erfindung liegt darin, dass die Mobilität des Funktelefones voll erhalten bleibt, die gesundheitsschädlichen Strahlungen jedoch fern vom menschlichen Kopf und sogar Körper gehalten werden können (z.B. in der Tasche, Handtasche, am Hosengürtel oder auf der nächstmöglichen Ablage). Zusätzlich wird das Bedienen des Gerätes zeitgleich mit einem Gespräch ermöglicht, sodass nahezu alle Operationen am Bedienerfeld (Notieren von Mitteilungen, Abrufen von Informationen, Bedienen eines möglicherweise eingebauten Spieles usw.) während eines Telefonates ermöglicht werden, ohne das Gespräch auch nur kurzfristig unterbrechen zu müssen.
Dabei kann die Erfindung aber nach wie vor auch als Kompaktgerät wie in Zeichnung I gezeigt, genutzt werden, d.h. ohne die Teile A und B nach Zeichnung II und IV trennen zu müssen; in diesem letzteren Fall würde der Benutzer auf die VorTeile der Erfindung verzichten, könnte sich jedoch jederzeit entscheiden ―auch während eines Gespräches -, doch die Vorteile nutzen zu wollen.

Die Erfindung ist in der Weise konzipiert, dass die Einheit aus zwei aneinander angepassten Teilen besteht und anhand der Zeichnungen und der nachfolgenden Beschreibung einer möglichen Ausführungsart entsprechend der Patentansprüche näher dargestellt wird.

Es zeigen
- Zeichnung I ,: das Gerät im Kompaktzustand
- Zeichnung II ,: das Gerät in zwei Teile getrennt, aber noch durch eine zur Kommunikation geeignete Schnur verbunden
- Zeichnung IV ,: das Gerät in zwei Teile getrennt, wobei die Verbindung der beiden Teile per Funk besteht

Angemerkt sei, dass die Zeichnungen lediglich den schematischen Aufbau des Funktelefonapparates verdeutlichen, die letztendliche Bauweise in Größe, Aussehen, Form, Design und Verhältnismäßigkeiten aber variieren kann.

Im Teil A wie in Zeichnung I und II näher dargestellt, wird das Hör- und Sprechteil, und als Alternative in Teil B ein Aufrollmechanismus nach Anspruch 3 untergebracht.

In Teil B, Zeichnung I und II, wird der Transponder, die Dipolantenne, das Bedienerfeld, das Display und alternativ in Teil A ein Aufrollmechanismus nach Anspruch 3 untergebracht.

Die übrigen Teile - Stromversorgung, die Karte, Zusatzeinrichtungen usw. werden je nach Ausführung in der Teile A oder B untergebracht oder verteilt. Der Ort ihrer Unterbringung ist, sofern nicht zur Erreichung der Ziele der Erfindung notwendig, irrelevant.
Beide Teile sind durch eine zur Kommunikation- und Energieübertragung geeignete Schnur nach Anspruch 2 miteinander verbunden.

In Teil A, wie in Zeichnung I und IV näher dargestellt, befinden sich das Hör- und Sprechteil sowie die für eine drahtlose Funkübertragung mit Teil B benötigten Teile nach Anspruch 6, eine zusätzliche Stromversorgung , sowie ein Ein-/Ausschalter und Berührungskontakte nach Anspruch 5 ― 8. In Teil B, Zeichnung I und IV werden eingebaut der Transponder, die Dipolantenne, das Bedienerfeld , das Display sowie die für eine drahtlose Funkübertragung mit Teil A notwendigen Teile nach Anspruch 6, und Berührungskontakte nach Anspruch 5.
Teile A und B sind durch die Berührungskontakte miteinander verbunden, wenn die beiden Teile kompakt zusammengefügt sind. In dieser Stellung ist die Sende-/Empfangvorrichtung nach Anspruch 6 ausgeschaltet.
Letztere wird automatisch aktiviert durch Lösen des Ein-/Ausschalters nach Anspruch 8, wenn beide Teile A und B von einander getrennt werden.

Die Erfindung findet Anwendung bei allen Mobiltelefonen, sowie bei schnurlosen Telefonanlagen (Haustelefonen), wie Zeichnung III zeigt.

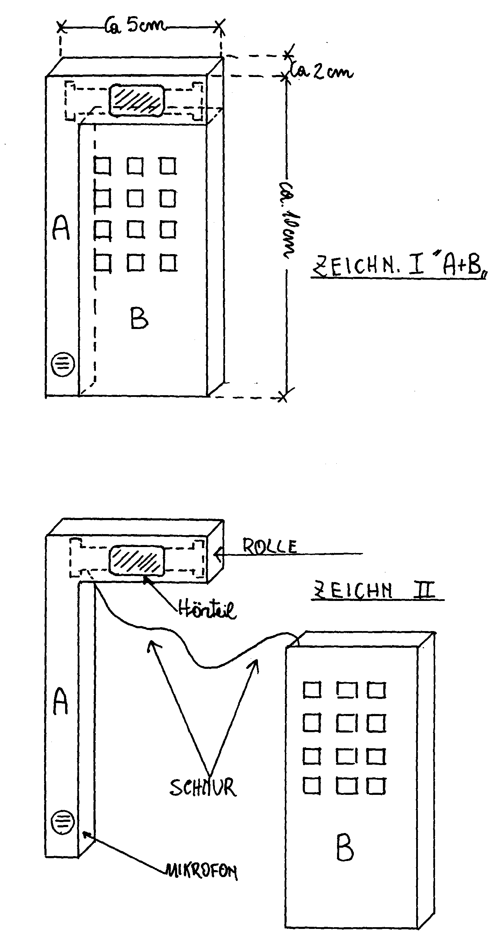

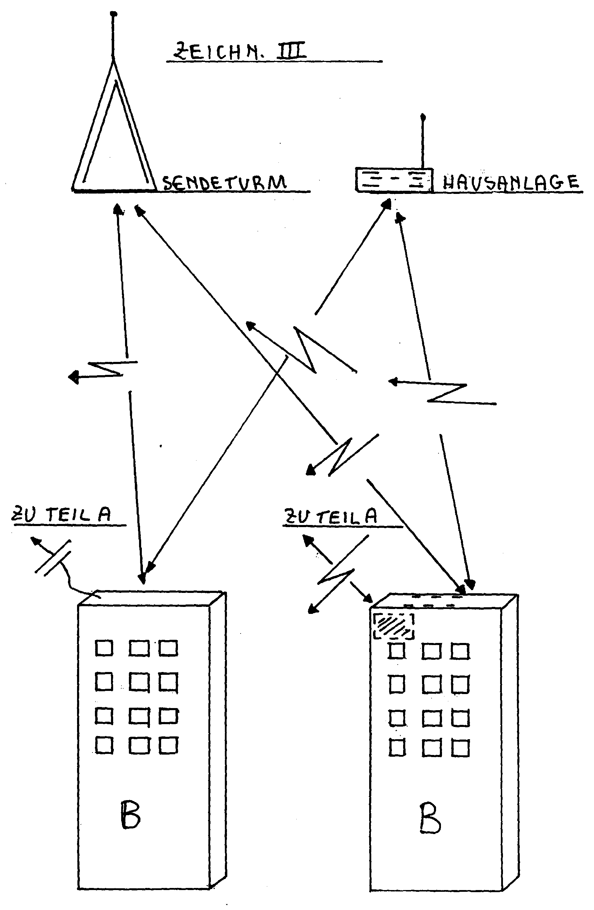

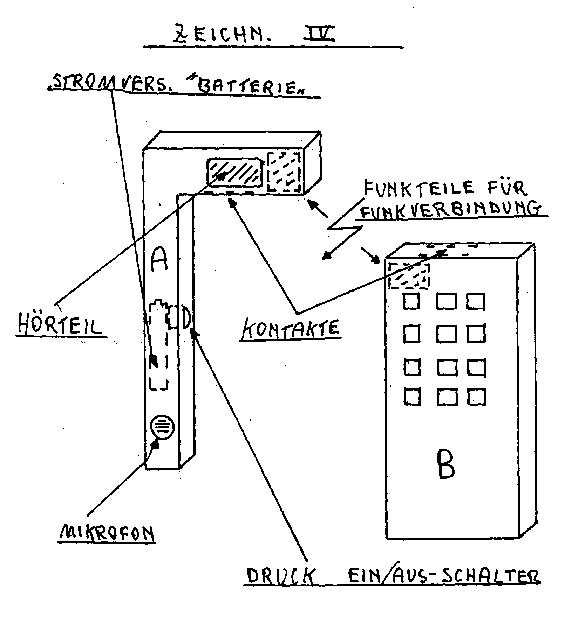

## Patentansprüche

1. Funktelefonapparat, (in der Umgangssprache auch Handy oder Mobiltelefon genannt)
dadurch gekennzeichnet, dass dessen Sprech- und Hörteil getrennt werden können von den übrigen Teilen (Teil 1B).

2. Funktelefonapparat nach Anspruch 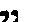 1",
dadurch gekennzeichnet, dass mittels einer zur Kommunikationsübertragung geeigneten Schnur die getrennten Teile 1A/1B) miteinander verbunden bleiben.

3. Funktelefonapparat nach Anspruch 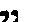 1 bis 2"
dadurch gekennzeichnet, dass die Verbindungsschnur auf einen in ein beliebiges der beiden Teile des Anspruches zu 1 eingebauten Aufrollmechanismus aufgerollt ist.

4. Funktelefonapparat nach Anspruch 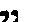 1 bis 3"
dadurch gekennzeichnet, dass die Verbindungsschnur sich automatisch in die Spule nach Anspruch 3 einrollt, wenn beide Teile nach der Trennung wieder miteinander verbunden werden.

5. Funktelefonapparat nach Anspruch 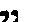 1",
dadurch gekennzeichnet, dass bis zur Trennung der Teile (Teil 1A und Teil 1B) diese alternativ an Stelle der Kommunikationsschnur durch Berührungskontakte nach Anspruch 2 miteinander verbunden sind.

6. Funktelefonapparat nach Anspruch 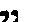 1 und 5",
dadurch gekennzeichnet, dass mittels der in jedem der beiden Teile eingebauten Sende-/Empfangsvorrichtung nach der Trennung die Teile kommunikativ miteinander verbunden bleiben.

7. Funktelefonapparat nach Anspruch 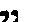 1, 5 und 6",
dadurch gekennzeichnet, dass die Sende-/Empfangsvorrichtung eine geringe Reichweite hat, die auf den Abstand zwischen den beiden getrennten Teilen in Anspruch 1 abgestimmt ist.

8. Funktelefonapparat nach Anspruch 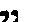 1, 5, 6 und 7",
dadurch gekennzeichnet, dass die Kommunikationsverbindung zwischen beiden Teilen (Teil 1A und 1B) erst durch Schaltung nach deren Trennung aktiviert wird.
